(19) Europäisches Patentamt
European Patent Office
Office européen des brevets

(11) **EP 2 934 844 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(51) Int Cl.:
**B29C 43/24** *(2006.01)*  **B29C 43/58** *(2006.01)*
**D21G 1/00** *(2006.01)*

(21) Anmeldenummer: **13811554.8**

(22) Anmeldetag: **20.12.2013**

(86) Internationale Anmeldenummer:
**PCT/EP2013/077626**

(87) Internationale Veröffentlichungsnummer:
**WO 2014/096329 (26.06.2014 Gazette 2014/26)**

(54) **GLÄTTWERK UND VERFAHREN ZUM HERSTELLEN EINER FOLIE AUS THERMOPLASTISCHEN KUNSTSTOFFEN**

SMOOTHING APPARATUS AND PROCESS OF MANUFACTURING A THERMOPLASTIC FILM

APPAREIL DE LISSAGE ET PROCÉDÉ DE FABRICATION D' UN FILM EN MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12199014**

(43) Veröffentlichungstag der Anmeldung:
**28.10.2015 Patentblatt 2015/44**

(73) Patentinhaber: **Reifenhäuser GmbH & Co. KG Maschinenfabrik**
**53844 Troisdorf (DE)**

(72) Erfinder: **MEYER, Helmut**
**53842 Troisdorf (DE)**

(74) Vertreter: **Wagner Albiger & Partner**
**Patentanwälte mbB**
**Siegfried-Leopold-Strasse 27**
**53225 Bonn (DE)**

(56) Entgegenhaltungen:
EP-A1- 2 581 192     DE-A1-102005 042 442
DE-A1-102007 052 812     US-A1- 2009 295 017

- **DATABASE WPI Week 200065 Thomson Scientific, London, GB; AN 2000-667723 XP002723905, -& JP 2000 271950 A (SUMITOMO BAKELITE CO LTD) 3. Oktober 2000 (2000-10-03)**

**Beschreibung**

Die vorliegende Erfindung betrifft ein Glättwerk nach dem Oberbegriff des anliegenden Anspruchs 1, umfassend mindestens zwei Walzen, zwischen denen ein Walzenspalt ausbildbar ist, wobei die Walzen endseitig in Lagern drehbar gelagert sind und eine der Walzen ortsfest und mindestens eine weitere Walze als Zustellwalze ausgeführt ist und ein erstes Verstellsystem aufweist, mittels dessen die Lager der Zustellwalze unter Veränderung des Walzenspaltes verlagerbar sind.

Derartige Glättwerke werden bei der Herstellung von Kunststofffolien und -platten eingesetzt, wobei eine in einem Extrusionsprozess gebildete Schmelze nach dem Austritt aus einem Breitschlitzwerkzeug durch einen einstellbaren Glättspalt zwischen den Walzen hindurchgeführt wird. Die Schmelze wird dabei abgekühlt und derart geformt, dass eine Folienbahn mit einheitlicher Dicke sowie mit einem homogenen Erscheinungsbild über die gesamte Folienfläche entsteht. Derartige sogenannte Glättwerksfolien werden beispielsweise aus Polystyrol, Polypropylen oder Polyester gefertigt und finden eine breite Verwendung unter anderem beim Transport und Schutz von Nahrungsmitteln sowie in der Automobilindustrie.

Ein Glättwerk umfasst in der Regel mindestens zwei Walzen, von denen eine Walze ortsfest und mindestens eine weitere Walze als Zustellwalze ausgeführt ist. Diese Zustellwalze ist über ein Verstellsystem verlagerbar, so dass unterschiedliche Glättspalteinstellungen zwischen der ortsfesten und der verstellbaren Walze realisierbar sind. Auf diese Weise können Folien unterschiedlicher Stärke hergestellt werden.

Die vorliegende Erfindung betrifft auch ein Verfahren zur Herstellung von Kunststofffolien und -platten nach dem Oberbegriff des anliegenden Anspruchs 11. Die JP-A-2000 271 950 offenbart ein Glättwerk mit einer ortsfesten und mindestens einer weiteren Walze, die als Zustellwalze ausgeführt ist und über ein zweites Verstellsystem auch eine Verschränkung der Zustellwalze zur ortsfesten Walze einstellbar ist. Damit wird die Dicke der Folie eingestellt. Aufgrund zahlreicher Störeinflüsse, z. B. unvermeidliche und mit größer werdenden Abmessungen der Walzen deutlicher zutage tretender Walzendurchbiegungen gestaltet es sich schwierig, eine gleichmäßig gewünschte Dicke der im Glättwerk erzeugten Folie über deren gesamte Breite sicherzustellen. Es ist daher bereits versucht worden, die Dicke der Folie über deren Breite zu messen und Dickenprofil zu erstellen, wobei nachfolgend anhand des ermittelten Dickenprofils Einfluss auf das Dickenprofil der dem Glättwerk zugeführten Schmelze genommen wird, um den unerwünschten Effekten, hervorgerufen durch die Walzendurchbiegung, entgegenzuwirken. So kann die Austrittsöffnung einer Breitschlitzdüse nach Maßgabe des gemessenen Dickenprofils verändert werden, um das Dickenprofil der erhaltenen Folie möglichst konstant an einen vorgegebenen Sollwert anzugleichen. Dies ist jedoch mit hohem Regelungsaufwand verbunden, was als nachteilig angesehen wird.

Aufgabe der vorliegenden Erfindung ist daher die Bereitstellung eines Glättwerks und eines Verfahrens zum Herstellen einer Folie aus thermoplastischen Kunststoffen, bei welchen auf einfache Weise Abweichungen des Dickenprofils der hergestellten Folie z.B. infolge von Walzendurchbiegungen kompensiert werden können.

Diese Aufgabe wird gelöst durch ein Glättwerk mit den Merkmalen des Patentanspruchs 1.

Ein erfindungsgemäßes Verfahren zur Lösung der gestellten Aufgabe ist Gegenstand des Patentanspruchs 11

Vorteilhafte Ausgestaltungen und Weiterbildungen der Erfindung sind Gegenstand der Unteransprüche.

Die Erfindung sieht vor, dass die Zustellwalze an beiden Lagern jeweils ein erstes Verstellsystem aufweist, mit dem der Walzenspalt einstellbar ist und jedem ersten Verstellsystem zugeordnet ein zweites Verstellsystem vorgesehen ist, mittels dessen eine axiale Verschränkung der Zustellwalze zur ortsfesten Walze einstellbar ist. Somit kann das erfindungsgemäße Glättwerk ermöglichen, zur Kompensation von unvermeidlichen Walzendurchbiegungen eine Zustellwalze gegenüber der ortsfesten, nicht verstellbaren Walze verschränkbar zu lagern, das heißt die idealisierten Mittellinien dieser beiden Walzen, welche zugleich die Rotationsachsen derselben bilden, verlaufen dann nicht mehr parallel, sondern leicht verschränkt zueinander, wodurch sich ein durchbiegungsunabhängiger konstanter Spalt zwischen beiden Walzen einstellen lässt.

Nach einem Vorschlag der Erfindung wird das zweite Verstellsystem um 90° gedreht gegenüber dem ersten Verstellsystem angeordnet, so dass die Verschränkung der Zustellwalze in einer Ebene stattfindet, die senkrecht zu derjenigen Ebene verläuft, in welcher die Einstellung des Walzenspaltes durchgeführt wird.

Die im Rahmen der Erfindung eingesetzten Verstellsysteme unterliegen keiner generellen Beschränkung, jedoch sollten diese eine möglichst spielfreie Einstellung des Walzenspaltes bzw. der axialen Verschränkung der Zustellwalze ermöglichen.

Nach einem Vorschlag der Erfindung wird daher vorgeschlagen, dass das erste und/oder zweite Verstellsystem eine Zahnstange sowie ein Ritzel aufweisen, welches in Zahneingriff mit der Zahnstange steht und über einen Motor drehantreibbar ist, wobei der Abstand der zwischen dem Ritzel und der Zahnstange unter Veränderung der Zahneingriffstiefe zwischen diesen veränderbar ist.

Im Einzelnen ist es vorgesehen, dass eine Zahnstange an einem Lager der Zustellwalze angreift und mit einem über einen Motor antreibbaren Ritzel derart zusammenwirkt, dass die Rotationsbewegung des Motors und des Ritzels in eine Linearbewegung der Zahnstange und damit des Lagers der Zustellwalze umgesetzt wird. Je nach Drehrichtung des Motors kann die Zustellwalze so unter Veränderung des Walzenspaltes auf eine ortsfeste Walze zu oder von dieser weg bewegt werden bzw. eine axiale Verschränkung gegenüber der ortsfesten Walze eingestellt werden. Die korrespondierenden Zahnungen von Zahnstange und Ritzel sind dabei so ausgeführt, dass ein sehr exaktes Einstellen des Verstellweges möglich ist. Hierdurch lassen sich minimalste Verstellwege im μm-Bereich umsetzen.

Aufgrund der erfindungsgemäß vorgesehenen Veränderbarkeit des Abstandes zwischen dem Ritzel und der Zahnstange kann die Zahneingriffstiefe zwischen diesen beiden in Eingriff stehenden Teilen der ersten und zweiten Verstelleinrichtung eingestellt und verändert werden. Üblicherweise wird die Zahneingriffstiefe zwischen einem Ritzel und einer hierzu korrespondierenden Zahnstange auf ein vorbestimmtes Maß festgelegt, welches aufgrund des dann vorherrschenden Zahnflankenspiels die Freigängigkeit der Ritzelzähne in der Verzahnung der Zahnstange sicherstellt, wenn das Ritzel mittels des zugeordneten Motors gedreht wird. Wird aber z. B. nach Erreichen der gewünschten Position die Tiefe des Zahneingriffs erhöht, indem der Abstand zwischen dem Ritzel und der Zahnstange entsprechend verringert wird, so wird auch das vorhandene Zahnflankenspiel verringert und im Idealfall nahezu völlig eliminiert.

Die Erfindung nutzt diesen vorangehend beschriebenen Effekt, um eine leichte Verstellung mittels des an sich vorteilhaften Zahnstangen-Ritzelsystems zu gewährleisten und das Spiel innerhalb der Verstelleinrichtung zu eliminieren. Auf diese Weise wurde in Versuchen bereits das Spiel auf unter 1/100 mm eingestellt. Das Ziel ist hierbei eine leichte Vorspannung.

Sofern eine erneute Veränderung des Walzenspaltes oder der axialen Verschränkung erforderlich wird, kann vorgesehen sein zunächst die Zahneingriffstiefe und das damit einhergehende Zahnflankenspiel durch Vergrößerung des Abstandes zwischen Ritzel und Zahnstange wieder auf ein übliches Niveau erhöht und anschließend durch Rotation des Ritzel des gewünschte Verstellweg abgefahren, bis der Vorgang der Spieleliminierung aufs Neue beginnt.

Da eine Verstellung jedoch nur selten nötig ist, kann mittels der Verstelleinrichtung auch eine dauerhafte Einstellung vorgenommen werden, da selbst bei eliminiertem Spiel noch eine Verstellung möglich ist. Es kann vorgesehen sein, das Ritzel und den Motor unter Zwischenlage einer austauschbaren Distanzplatte am Gehäuse zu haltern dergestalt, dass die Dicke der Distanzplatte den Abstand zwischen Ritzel und Zahnstange definiert. Durch Auswahl einer geeigneten Dicke der Distanzplatte oder eine entsprechenden Nacharbeit an dieser Platte, z.B. mechanischen Materialabtrag, kann das Spiel innerhalb der Verstelleinrichtungen im gewünschten Maß eliminiert werden.

Nach einem Vorschlag der Erfindung ist der Abstand zwischen dem Ritzel und der Zahnstange über ein am Ritzel angreifendes Exzentergetriebe veränderbar, welches bei entsprechender Betätigung, z.B. über eine Handkurbel oder einen steuerbaren Antrieb die gewünschte Veränderung des Abstandes des Ritzels zur Zahnstange hervorruft.

Ferner kann vorgesehen sein, dass der Abstand zwischen dem Ritzel und der Zahnstange lösbar fixierbar ist, um stabile Einstellzustände zu gewährleisten. Auch kann auf diese Weise eine Vorspannung des Ritzels gegenüber der Zahnstange bewirkt werden, um das Spiel zwischen diesen völlig zu eliminieren. Sie können auch mit geeigneten Beschichtungen, z. B. einer PVD-Beschichtung versehen sein, um z. B. Reibung und Verschleiß zu minimieren.

Die Zahnstange und das Ritzel sind nach einem in den Ansprüchen nicht angegebenen Vorschlag der Erfindung schrägverzahnt ausgeführt, um größere Flankenauflagen zu realisieren. Außerdem wird durch eine Schrägverzahnung die sogenannte Sprungüberdeckung vergrößert, was einen positiven Einfluss auf die Bewegungsübertragung hat.

Ferner kann die Zahnstange zur Erzielung guter Standfestigkeit und Genauigkeit gehärtet, geschliffen und gehont ausgeführt sein.

Gemäß einer Ausgestaltung der Erfindung sind die ersten und/oder zweiten Verstellsysteme zentral ansteuerbar, so dass ein sehr genaues paralleles Verfahren der Walze und damit das Einstellen eines über die gesamte Walzenlänge einheitlich dimensionierten Walzenspaltes sowie der axialen Verschränkung möglich ist.

Ein weiterer Vorschlag der Erfindung sieht vor, dass zwischen dem Ritzel und dem Motor des ersten und/oder zweiten Verstellsystems ein Getriebe angeordnet ist. Durch ein derartiges Getriebe kann beispielsweise eine Übersetzung in den Antrieb eingebracht werden. Bei einer bevorzugten Ausführung der Erfindung ist das Getriebe als Planetengetriebe mit hoher Verdrehsteifigkeit und geringem Flankenspiel ausgebildet.

Der das Ritzel antreibende Motor ist gemäß einer Ausgestaltung der Erfindung ein Servomotor. Servomotoren zeichnen sich neben kompakter Bauweise durch ein sehr gutes Regelverhalten aus und ermöglichen es, eine Zielposition mikrometergenau anzufahren.

Bei einer weiteren Ausführung des erfindungsgemäßen Glättwerks sind drei Walzen vorgesehen, von denen zwei Walzen als Zustellwalzen ausgebildet sind und sich vorzugsweise diametral gegenüberliegend der ortsfesten Walze befinden. Bei einer solchen Anordnung lassen sich zwei Walzenspalte einstellen und eine beispielsweise zu glättende Folienbahn kann nacheinander durch die beiden Glättspalte geführt werden, wodurch besonders gute Ergebnisse im Glättprozess erzielt werden können. Mindestens eine der Zustellwalzen kann darüber hinaus erfindungsgemäß gegenüber der ortsfesten Walze axial verschränkt werden, vorzugsweise diejenigen, die gemeinsam mit der ortsfesten Walze den ersten Walzenspalt bilden, durch den die Schmelze geführt wird.

Das erfindungsgemäße Verfahren zum Herstellen einer Folie aus thermoplastischen Kunststoffen beruht auf dem Einsatz eines vorangehend bereits erläuterten Glättwerks, bei welchem die thermoplastischen Kunststoffe als Schmelze dem Glättwerk mit mindestens zwei rotierenden und in ihrem Abstand zueinander in einer ersten Ebene verstellbaren Walzen zugeführt wird, zwischen denen ein nach Maßgabe des Abstandes der Walzen einstellbarer Walzenspalt ausgebildet ist und die Schmelze durch den Walzenspalt geführt wird und dabei zu der Folie geformt und abgekühlt wird.

Um entsprechend der erfindungsgemäßen Aufgabe insbesondere Schwankungen des Dickenprofils der Folie aufgrund der Walzendurchbiegung kompensieren zu können, wird vorgeschlagen, dass die Dicke der erhaltenen Folie über deren Breite gemessen wird und ein Dickenmessprofil der Folie erstellt wird, welche mit einem vorgegebenen Sollwert verglichen wird und nach Maßgabe der gemessenen Abweichung des Dickenmessprofils vom Sollwert eine der Walzen hinsichtlich ihrer Rotationsachse gegenüber der Rotationsachse der im Walzenspalt gegenüberliegenden weiteren Walze in einer zweiten Ebene verschränkt wird, welche senkrecht zur ersten Ebene verläuft.

Die Größe der an der ersten Walze vorzunehmenden Verschränkung kann dabei von einer Anlagensteuerung in einer im Nachfolgenden noch näher erläuterten Weise anhand der Messwerte aus dem Dickenmessprofil der Folie berechnet und durch entsprechende Ansteuerung von Verstellsystemen der Walze an dieser vorgenommen werden.

Nach einem in den Ansprüchen nicht angegebenen Vorschlag der Erfindung sind die Walzen endseitig in Lagern drehbar gelagert, wobei die eine Walze als Zustellwalze und die weitere Walze als ortsfeste Walze ausgebildet ist und die Lager der Zustellwalze werden beim Verschränken dieser aus einer Nulllage, in welcher die Rotationsachsen der Zustellwalze in Bezug auf die ortsfeste Walze parallel zueinander verlaufen, entgegengesetzt zueinander in der zweiten Ebene verfahren. Hierbei wird ein Verfahrweg der Lager von jeweils ± 30 mm, insbesondere ± 25 mm als ausreichend angesehen.

Im Folgenden wird die Erfindung anhand von Ausführungsbeispielen und unter Bezugnahme auf die beigefügten Zeichnungen näher erläutert. Es zeigen:

Figur 1 eine schematische Draufsicht auf ein erfindungsgemäßes Glättwerk;

Figur 2 eine schematische Seitenansicht des Glättwerks aus Fig. 1;

Figur 3 die Ansicht auf einen Teil des erfindungsgemäßen Glättwerks;

Figur 4 in schematischer Darstellung das erfindungsgemäße Prinzip zur Reduzierung des Zahnflankenspiels;

Figur 5a eine alternative Ausgestaltung des erfindungsgemäßen Glättwerks in einer Ansicht gemäß Fig. 3;

Figur 5b die Seitenansicht der Vorrichtung gemäß Fig. 5a;

Figur 6 in schematischer Darstellung die Walzenanordnung des erfindungsgemäßen Glättwerks;

Figur 7 die axiale Verschränkung der Zustellwalze gem. Fig. 6;

Figur 8 das Dickenprofil einer erhaltenen Folie.

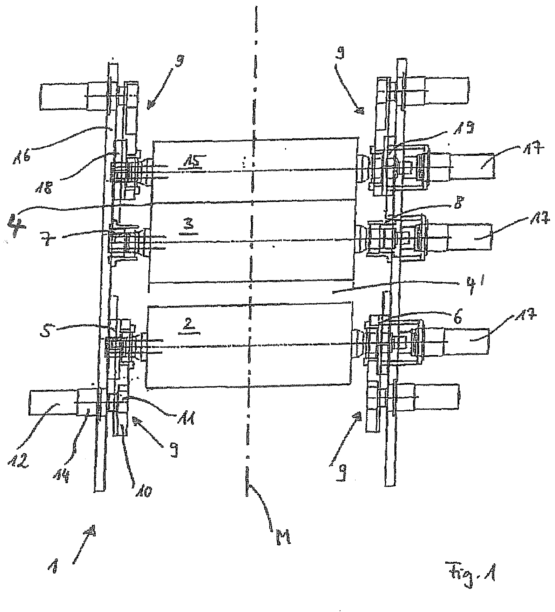

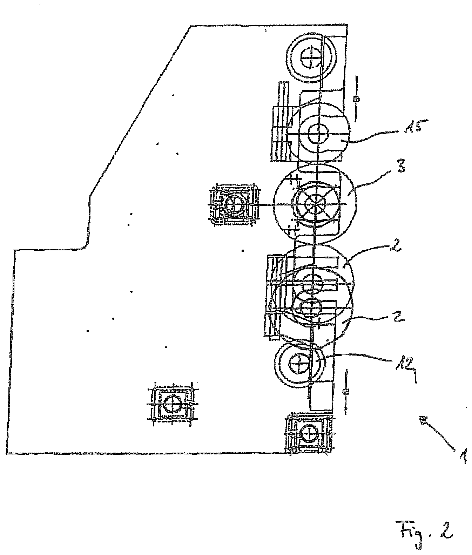

Die Figuren 1 und 2 zeigen eine im Ganzen mit 1 bezeichnete Walzenstuhlung eines Glättwerkes, welche drei parallel angeordnete Walzen 2, 3, 15 umfasst, die in einem Gestell 16 gehaltert sind. Alle drei Walzen 2, 3, 15 sind endseitig über Lager 5, 6, 7, 8, 18, 19 mit dem Gestell 16 verbunden, in denen sie drehbar gelagert sind. Jede der drei Walzen 2, 3, 15 weist einen eigenen Antriebsmotor 17 auf, über welchen sie in Rotation versetzt werden kann.

Die mittig angeordnete Walze 3 ist eine ortsfeste Walze, während die beiden Walzen 2, 15 als Zustellwalzen ausgebildet sind. Die beiden Zustellwalzen sind jeweils beidseitig mit einem Verstellsystem 9 ausgestattet, über welches die jeweiligen Lager 5, 6, 18, 19 mitsamt der darin aufgenommenen Walzen 2, 15 entlang des Gestelles 16 linear verschiebbar sind.

Durch Verschiebung der Lager 5, 6, 18, 19 kann zwischen den Walzen 2 und 3 ein Walzenspalt 4 und zwischen den Walzen 3 und 15 ein Walzenspalt 20 eingestellt werden.

Die nun folgende Beschreibung des Aufbaus und der Funktionsweise des Verstellsystems 9 beschränkt sich auf das in Figur 1 links unten dargestellte Verstellsystem 9 zur Verlagerung des Lagers 5 der Walze 2. Aufgrund der Symmetrie des Aufbaus der Walzenstuhlung gilt Entsprechendes für das am anderen Ende der Walze 2 angeordnete Verstellsystem 9 sowie für die beiden die Position der Walze 15 steuernden Verstellsysteme 9.

Das Verstellsystem 9 weist eine Zahnstange 10 sowie ein mit dieser zusammenwirkendes Ritzel 11 auf. Die Zahnstange 10 greift an dem Lager 5 an. Über einen Servomotor 12 sowie ein zwischengeschaltetes Planetengetriebe 14 ist das Ritzel 11 zur Rotation antreibbar, wodurch sodann die Zahnstange 10 und mit dieser das Lager 5 linear und geführt durch die Trägerkonstruktion 16 verschoben werden. Je nach Drehrichtung des Servomotors 12 erfolgt die Verschiebung auf die ortsfeste Walze 3 zu oder von dieser weg. Durch die Verwendung eines Servomotors ist es dabei möglich, eine gewünschte Position sehr exakt anzufahren.

Um die Walze 2 exakt parallel zu der ortsfesten Walze 3 verfahren und positionieren zu können, erfolgt der Antrieb der Verstellsysteme 9 für die Zustellbewegung der beiden Lager 5 und 6 synchron.

Sobald der gewünschte Verfahrweg der Zustellwalzen 2,15 durch die vorangehend erläuterte Betätigung des Verstellsystems 9 abgefahren worden ist und der Walzenspalt zur ortsfesten Walze 3 im gewünschten Maß eingestellt ist, muss zur Sicherstellung einer möglichst konstanten Produktqualität jede der verstellbaren Walzen möglichst spielfrei gelagert werden, um den Walzenspalt auch bei sich einstellender Flächenpressung zwischen den Walzen auf dem gewünschten Maß zu halten.

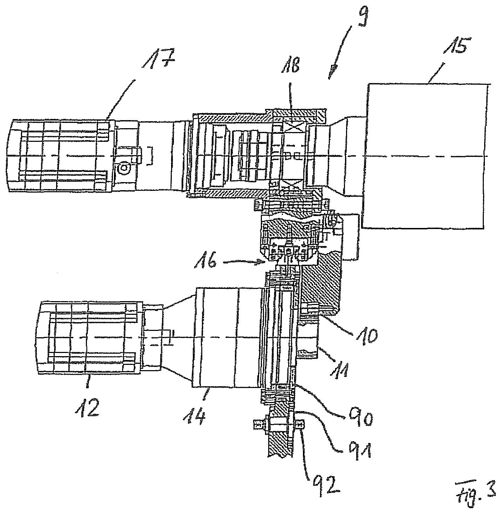

Zu diesem Zweck ist der Servomotor 12 mit seinem Planetengetriebe 14 und dem davon drehangetriebenen Ritzel 11, wie aus Figur 3 ersichtlich, in einem Exzentergetriebe bestehend aus einem ringförmigen Exzenter 90 mit Außenverzahnung und einen in die Außenverzahnung eingreifenden Ritzel 91 gelagert, welches zum Beispiel durch Angriff eines Drehwerkzeuges (nicht dargestellt) oder eines geeigneten Antriebsmotors am Zapfen 92 um seine eigene Achse gedreht werden kann und infolge des Zahneingriffs sodann den Exzenter 90 gleichsam verdreht.

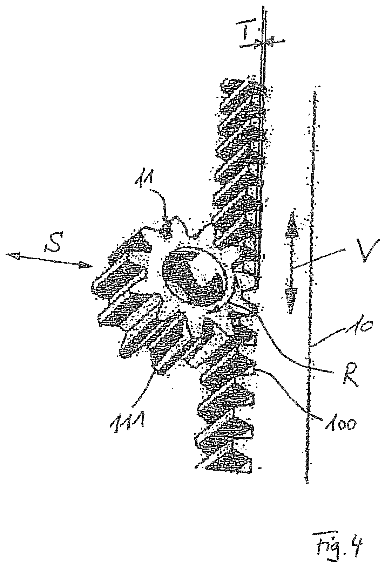

Wie aus der schematisierten Darstellung gemäß Figur 4 ersichtlich, wird bei Betätigung des Exzenters 90 in der einen oder anderen Drehrichtung eine Verlagerung des mit der Zahnstange 10 in Eingriff stehenden Ritzels 11 in oder entgegen dem Zahngrund 100 der Zahnstange 10 bewirkt, was in Figur 4 mit Pfeil S angedeutet ist.

Wenn demgemäß durch Betätigung des Exzenters 90 das Ritzel 11 in Pfeilrichtung S nach rechts verlagert wird, vergrößert sich die Zahneingriffstiefe der Ritzelzähne 111 des Ritzels 11 in der Zahnstange 10, so dass der Abstand T zwischen Ritzel 11 und Zahnstange 10 entsprechend verringert wird. Dementsprechend verringert sich auch das Zahnflankenspiel zwischen dem Ritzel 11 und der Zahnstange 10, so dass nahezu völlige Spielfreiheit zwischen dem Ritzel 11 und der Zahnstange 10 eingestellt werden kann.

Wird eine erneute Betätigung des Verstellsystems 9 erforderlich, um den Walzenspalt zwischen der Zustellwalze 2, 15 und der ortsfesten Walze 3 zu verändern, so wird zunächst der Exzenter 90 mittels des Ritzels 91 so verdreht, dass eine Bewegung des Ritzels 11 in Fallrichtung S nach links gemäß der Darstellung in Figur 4 erfolgt, so dass durch den sich vergrößernden Abstand T zwischen Ritzel 11 und Zahnstange 10 die Zahneingriffstiefe zwischen Ritzel 11 und Zahnstange 10 verringert wird, bis wieder ein ausreichendes Zahnflankenspiel zum leichten Drehen des Ritzels 11 in Pfeilrichtung R und als Reaktion ein Verfahrbewegung in Fallrichtung V möglich wird. Sobald der neue gewünschte Walzenspalt auf diese Weise einjustiert ist, wird erneut der Exzenter 90 betätigt, um die Zahneingriffstiefe wieder auf das mögliche Minimum zu verringern.

Alternativ kann das Zahnflankenspiel auch dauerhaft auf ein Minimum reduziert werden und beibehalten werden, da auch dann noch eine Bewegung des Ritzels 11 in der Zahnstange 10 möglich ist. Das geringe eingestellte Zahnstangenspiel erlaubt jedoch eine hochpräzise Einstellung des Walzenspaltes.

Bei der Herstellung von Glättwerksfolien wird nun ein in einer Plastifiziereinheit erzeugter und aus einem Breitschlitzwerkzeug austretender Schmelzestrom in ein Glättwerk gemäß Figur 1 eingeführt und dort zunächst über die Walze 15 geführt, dann durch den Walzenspalt 4 hindurchgefädelt und unter der Walze 3 hinweg durch den Walzenspalt 4' über die Walze 2 geführt. An das Glättwerk schließt sich üblicherweise ein Wickler an, in dem die fertige Folie aufgewickelt wird. Die Walzen 2, 3, 15 des Glättwerkes werden zur Abkühlung des Schmelzestromes gekühlt.

In der in Figur 1 dargestellten Situation ist der Walzenspalt 4' weit geöffnet, was beispielsweise dem anfänglichen Einfädeln eines zu glättenden Schmelzestromes dient. Sobald der Schmelzestrom über die Walzen 2, 3, 15 geführt sowie durch die Walzenspalte 4, 20 gefädelt ist, können die Walzenspalte 4, 4' durch Verlagerung der Lager 5, 6, 18, 19 in der oben beschriebenen Weise verkleinert werden bis auf ein voreingestelltes, für den jeweiligen Glättprozess erforderliches Maß. Eine solche schmale Einstellung des Glättspaltes ist in Figur 1 am Beispiel des Walzenspaltes 4 zu erkennen. In der Seitenansicht von Figur 2 ist die als Zustellwalze ausgebildete Walze 2 in zwei durch eine entsprechende Verschiebung auseinander hervorgegangenen Positionen dargestellt.

Mit einer erfindungsgemäßen, einen Servomotor und ein Planetengetriebe aufweisenden Walzenstuhlung können je nach verwendetem Walzentyp Haltekräfte bis 500000 N und Verfahrkräfte bis 100000 N aufgebracht werden. Die auf diese Weise realisierbaren Verfahrwege liegen typischerweise zwischen 150 mm und 200 mm bei einer Positioniergenauigkeit zwischen 5 $\mu$m und 1 $\mu$m.

Der Vorzug der erfindungsgemäßen Walzenstuhlung mit elektromechanischem Verstellsystem liegt vor allem in der exakten Steuerbarkeit sowie der einfacheren Handhabung gegenüber einem hydraulischen System. Zudem weist das elektromechanische System eine kompaktere Bauweise und einen geringeren Verschleiß auf. Aufgrund der durch das erfindungsgemäße System möglichen genauen Positionierbarkeit der Zustellwalzen kann insbesondere auf zusätzliche Mess- und Einstelleinrichtungen zur Nachregelung des Walzenspaltes verzichtet werden, so dass sich durch den Einsatz des elektromechanischen Systems auch wirtschaftliche Vorteile ergeben.

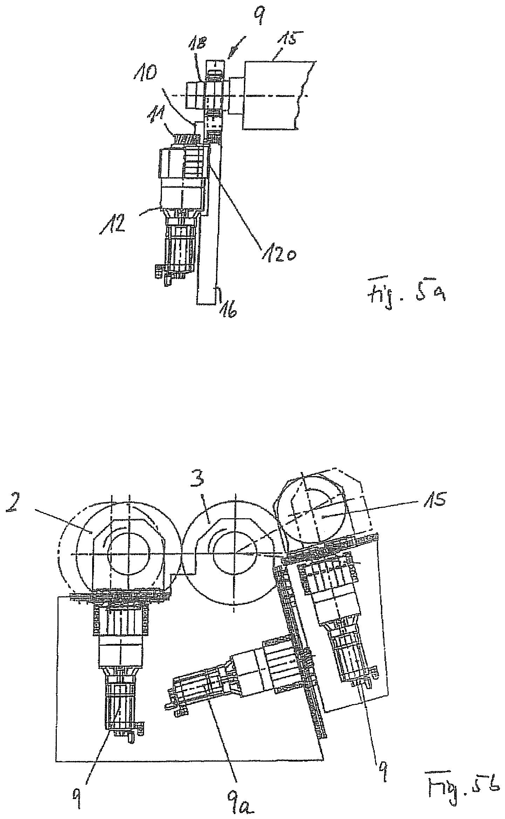

Bei dem Ausführungsbeispiel gemäß Figuren 5a, 5b ist der das Ritzel 11 antreibende Motor 12 unter Zwischenlegen einer auswechselbaren Distanzplatte 120 am Gehäuse 16 gehalten, wobei die Dicke der Distanzplatte 120 den Abstand zwischen Ritzel 11 und Zahnstange 10 und damit die Zahneingriffstiefe der Ritzelzähne des Ritzels 11 in der Zahnstange 10 definiert.

Verändert man nun die Dicke der Distanzplatte 120, z. B. durch Austausch und/oder Bearbeitung derselben, verändert sich entsprechend auch der Abstand zwischen Ritzel 11 und Zahnstange 10 und damit das Flankenspiel. Je dünner die Distanzplatte 120 ausgeführt wird, umso kleiner wird das besagte Spiel. Somit ist es möglich, das Zahnflankenspiel auf ein möglichst optimales Minimum einzujustieren.

Schließlich erkennt man aus der Figur 5b noch, dass im gezeigten Ausführungsbeispiel beide Zustellwalzen 2, 15 mit einem Verstellsystem 9 ausgebildet sind, jedoch ist die Zustellwalze 15 zusätzlich mit einem zum Verstellsystem 9 um 90° gedreht angeordnetem zweiten Verstellsystem 9a ausgebildet, mittels dessen eine axiale Verschränkung für ortsfesten Walze 3 eingestellt werden kann, um die Durchbiegung der Walze zu kompensieren.

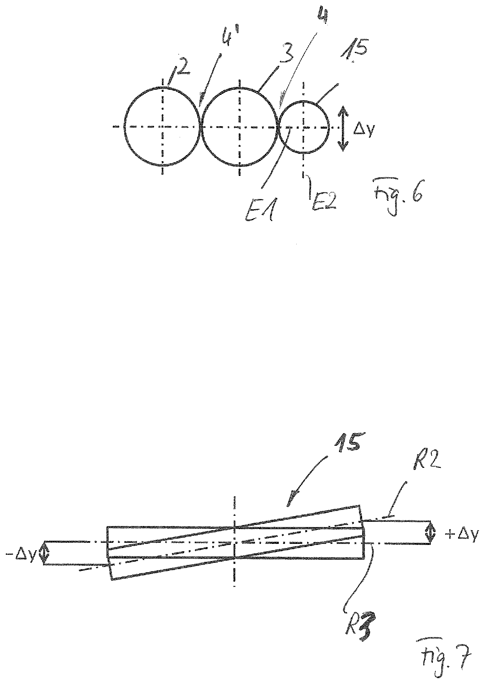

Im Rahmen der Herstellung einer Folie aus thermoplastischen Kunststoffen gelangt, wie aus Figur 6 schematisch ersichtlich, die aus einer hier nicht dargestellten Breitschlitzdüse stammende Schmelze zunächst in den Walzenspalt 4 zwischen der Zustellwalze 15 und der ortsfesten Walze 3, bevor sie über die ortsfeste Walze 3 dem zweiten Walzenspalt 4' zwischen der weiteren Zustellwalze 2 und der ortsfesten Walze 3 zugeführt wird und von dort das Glättwerk gemäß Figur 6 wieder verlässt.

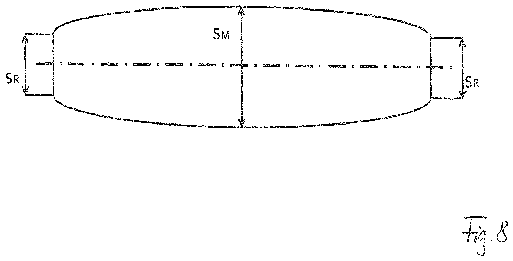

Infolge der unvermeidlichen Durchbiegung der Walzen 15, 3, die gemeinsam den Walzenspalt 4 bilden, stellt sich in der erhaltenen Folie ein Dickenprofil über deren Breite dar, welches aus der Figur 8 ersichtlich ist.

Ausgehend von dem an sich gewünschten voreingestellten Dickenwert, der nur am Rand der Folie erreicht wird und mit $S_R$ bezeichnet ist, ergibt sich ein zur Mitte hin parabelförmig ansteigender Verlauf der Foliendicke, die exakt im Bereich der mittleren Breite den Maximalwert $S_M$ erreicht, welcher dem gewünschten Dickenwert zuzüglich der Summe der Werte der vorherrschenden Walzendurchbiegungen entspricht:

$$S_M = S_R + 2f,$$

mit f = Durchbiegung einer Glättwalze beim Einsatz gleicher Glättwalzen.

Um diesem Problem im Rahmen der aus den Zeichnungen ersichtlichen Vorrichtung zu begegnen, wird das Dickenprofil gemäß Figur 8 von einer hier nicht dargestellten, an sich aber handelsüblich erhältlichen und insoweit auch bekannten Dickenmessvorrichtung kontinuierlich über die Breite der Folie erstellt, etwa wenn diese das Glättwerk wieder verlässt und aus den gewonnenen Messdaten wird ein Dickenmessprofil erstellt.

Eine Regelungseinrichtung, der die ermittelten Messwerte des Dickenmessprofils zugeleitet werden, errechnet sodann aus den Werten für $S_M$ und $S_R$ einen Korrekturwert $S_D$ nach folgender Formel:

$$S_D = \frac{S_M - S_R}{2}$$

Mittels der vorangehend bereits erläuterten zweiten Verstellsysteme 9a im Bereich der Lagerung der Verstellwalze 15 kann sodann eine axiale Verschränkung der Rotationsachse R2 der Verstellwalze 15 zur Rotationsachse R3 der ortsfesten Walze 3 in einer aus der Figur 6 ersichtlichen zweiten Ebene E2 ermittelt werden, die senkrecht zu einer ersten Ebene E1 verläuft, in welcher die Einstellung des Walzenspaltes 4 zwischen der ortsfesten Walze 3 und der Zustellwalze 15 bewirkt wird. Dabei wird, wie aus der Figur 7 ersichtlich, die axiale Verschränkung der Zustellwalze 15 dadurch erreicht, dass eines der Lager um einen Korrekturwert $-\Delta_Y$ in der einen Richtung innerhalb der Ebene E2, hier abwärts, und am gegenüberliegenden endseitigen Lager um den gleichen Wert $+\Delta_Y$ in entgegengesetzter, hier nach oben gerichteter Richtung verfahren wird.

Die Größe des eingesetzten Verfahrweges $\Delta_Y$ errechnet sich nach folgender Formel:

$$\pm \Delta_Y = \overline{S_D \left( dw - S_D \right)},$$

wobei dw den Durchmesser der Glättwalze 15 bezeichnet.

Dementsprechend werden die aus der Figur 5b ersichtlichen zweiten Verstellantriebe 9a, welche um 90° gedreht zu den den Walzenspalt einstellenden ersten Verstellsystemen 9 angeordnet sind, entsprechend angesteuert, um das Verfahren der endseitigen Lager um die Korrekturwerte $\pm \Delta_Y$ gemäß Figur 7 einzurichten.

Aufgrund der solchermaßen vorgenommenen axialen Verschränkung der Zustellwalze zur ortsfesten Walze kann die bislang unvermeidliche und durch die Walzendurchbiegung bedingte Störung des Dickenprofils der erhaltenen Folie nahezu vollständig eliminiert werden, wodurch eine erhebliche Einsparung von Rohstoffen und entsprechend verbesserte Dickentoleranz der erhaltenen Folie erzielt werden kann. Es zeigt sich ein extrem gleichmäßiges Dickenprofil, gerade auch bei großen Bahnbreiten mit einer erheblich geringeren Ausschussrate sowie signifikanter Abfallreduzierung.

Aufgrund des wesentlich vergleichmäßigten Dickenprofils lässt sich eine größere Präzision bei der Einstellung des Walzenspaltes und besonders bei der Kraftübertragung der Glättkräfte zwischen den Walzen 2, 3 und 15 erzielen, wobei auch die Rüstzeiten und Umstellzeiten im Rahmen von Produktumstellungen bedeutend verringert werden.

**Patentansprüche**

1. Glättwerk (1) zum Herstellen einer Folie aus thermoplastischen Kunststoffen, umfassend mindestens zwei Walzen (2, 3, 15), zwischen denen ein Walzenspalt (4, 4') für den Durchlauf der Folie ausbildbar ist, wobei die Walzen (2, 3, 15) endseitig in Lagern (5, 6, 7, 8, 18, 19) drehbar gelagert sind und eine der Walzen (3) ortsfest und mindestens eine weitere Walze (2, 15) als Zustellwalze ausgeführt ist und ein erstes Verstellsystem (9) aufweist, mittels dessen die Lager (5, 6, 18, 19) der Zustellwalze unter Veränderung des Walzenspaltes (4, 4') verlagerbar sind und eine Dickenmeßvorrichtung für die Erstellung eines Dickenprofils der Folie über die Breite derselben vorgesehen ist,**dadurch gekennzeichnet, dass** die Zustellwalze an beiden Lagern (5, 6, 18, 19) jeweils ein erstes Verstellsystem (9) aufweist und jedem ersten Verstellsystem (9) zugeordnet ein zweites Verstellsystem (9a) vorgesehen ist, mittels dessen eine axiale Verschränkung der Zustellwalze zur ortsfesten Walze (3) einstellbar ist, wobei einer Regelungseinrichtung die Messwerte des Dickenmeßprofils zuleitbar sind und mittels welcher Korrekturwerte für die axiale Verschränkung der Zustellwalze ermittelbar und das zweite Verstellsystem (9a) entsprechend ansteuerbar ist.

2. Glättwerk nach Anspruch 1, **dadurch gekennzeichnet, dass** das zweite Verstellsystem (9a) um 90° gedreht gegenüber dem ersten Verstellsystem (9) angeordnet ist.

3. Glättwerk (1) nach Anspruch 1, **dadurch gekennzeichnet, dass** das erste und/oder zweite Verstellsystem (9, 9a) eine Zahnstange (10) sowie ein Ritzel (11) aufweist, welches in Zahneingriff mit der Zahnstange steht und über einen Motor (12) drehantreibbar ist, wobei der Abstand zwischen dem Ritzel (11) und der Zahnstange (10) unter Veränderung der Zahneingriffstiefe zwischen diesen veränderbar ist.

4. Glättwerk (1) nach Anspruch 3, **dadurch gekennzeichnet, dass** der Abstand zwischen dem Ritzel (11) und der Zahnstange (10) über ein am Ritzel (11) angreifendes Exzentergetriebe veränderbar ist.

5. Glättwerk (1) nach einem der Ansprüche 3 oder 4, **dadurch gekennzeichnet, dass** der Abstand zwischen dem Ritzel (11) und der Zahnstange (10) lösbar fixierbar ist

6. Glättwerk (1) nach einem der Ansprüche 1 bis 5, **dadurch gekennzeichnet, dass** die ersten und/oder zweiten Verstellsysteme (9, 9a) der Zustellwalze zentral ansteuerbar sind.

7. Glättwerk (1) nach einem der Ansprüche 3 bis 6, **dadurch gekennzeichnet, dass** zwischen dem Ritzel (11) und dem Motor (12) des Verstellsystems (9, 9a) ein Getriebe (14) angeordnet ist.

8. Glättwerk (1) nach Anspruch 7, **dadurch gekennzeichnet, dass** das Getriebe (14) als Planetengetriebe ausgebildet ist.

9. Glättwerk (1) nach einem der Ansprüche 3 bis 8, **dadurch gekennzeichnet, dass** der Motor (12) ein Servomotor ist.

10. Glättwerk (1) nach einem der Ansprüche 1 bis 9, **dadurch gekennzeichnet, dass** drei Walzen (2, 3, 15) vorgesehen sind, von denen zwei Walzen (2,15) als Zustellwalzen ausgebildet sind.

11. Verfahren zum Herstellen einer Folie aus thermoplastischen Kunststoffen, bei welchen die thermoplastischen Kunststoffe als Schmelze einem Glättwerk mit mindestens zwei rotierenden und in ihrem Abstand zueinander in einer ersten Ebene (E1) verstellbaren Walzen (2, 3, 15) zugeführt wird, von denen eine Walze (3) ortsfest gelagert ist und zwischen denen ein nach Maßgabe des Abstandes der Walzen einstellbarer Walzenspalt (4, 4') ausgebildet ist, wobei die Schmelze durch den Walzenspalt (4, 4') geführt wird und dabei zu der Folie geformt und abgekühlt wird, und wobei eine Dickenmessvorrichtung für die Erstellung eines Dickenprofils der Folie über die Breite derselben vorgesehen ist, **dadurch gekennzeichnet, dass** ein Dickenmessprofil der Folie erstellt wird, welches mit einem vorgegebenen Sollwert verglichen wird und nach Maßgabe der gemessenen Abweichung des Dickenmessprofils vom Sollwert eine der Walzen (15) hinsichtlich ihrer Rotationsachse (R2) gegenüber der Rotationsachse (R3) der im Walzenspalt (4) gegenüberliegenden weiteren Walze (3) in einer zweiten Ebene (E2) verschränkt wird, welche senkrecht zur ersten Ebene (E1) verläuft.

12. Verfahren nach Anspruch 11, **dadurch gekennzeichnet, dass** die Walzen (2, 3, 15) endseitig in Lagern (5, 6, 7, 8, 18, 19) drehbar gelagert sind und die Lager (18, 19) der Walze (15) beim Verschränken derselben aus einer Nulllage, in welcher die Rotationsachsen (R2, R3) der Walze (15) und der weiteren Walze (3) parallel zueinander verlaufen, entgegengesetzt zueinander in der Ebene (E2) verfahren werden.

13. Verfahren nach Anspruch 11 oder 12, **dadurch gekennzeichnet, dass** ein Verfahrweg der Lager (18, 19) von jeweils $\pm$ 30 mm vorgesehen ist.

**Claims**

1. Calender (1) for producing a film of thermoplastic materials, comprising at least two rolls (2, 3, 15) between which a rolling gap (4, 4') for the film to pass through can be formed, wherein the rolls (2, 3, 15) are rotatably mounted on the end in bearings (5, 6, 7, 8, 18, 19), and one of the rolls (3) is configured to be static and at least one further roll (2, 15) is configured as a feed roll and has a first adjustment system (9), by means of which bearings (5, 6, 18, 19) of the feed roll can be displaced so as to modify the rolling gap (4, 4'), and a thickness measuring apparatus is provided for compiling a thickness profile of the film over the width thereof, **characterised in that** the feed roll respectively has a first adjustment system (9) on both bearings (5, 6, 18, 19), and a second adjustment system (9a) is provided, which is assigned to each adjustment system (9) and by means of which an axial overlap of the feed roll with respect to the static roll (3) can be set, the measurement values of the thickness measurement profile being feedable to a control device, by means of which correction values for the axial overlap of the feed roll can be determined and the second adjustment system (9a) can be driven accordingly.

2. Calender (1) according to claim 1, **characterised in that** the second adjustment system (9a) is arranged rotated by 90° relative to the first adjustment system (9).

3. Calender (1) according to claim 1, **characterised in that** the first and/or second adjustment system (9, 9a) has a gear rack (10) and a pinion (11), which is in tooth engagement with the gear rack and can be driven in rotation by means of a motor (12), the distance between the pinion (11) and the gear rack (10) being modifiable so as to modify the tooth engagement depth.

4. Calender (1) according to claim 3, **characterised in that** the distance between the pinion (11) and the gear rack (10) can be modified by means of an eccentric drive engaging on the pinion (11).

5. Calender (1) according to any one of claims 3 or 4, **characterised in that** the distance between the pinion (11) and the gear rack (10) can be releasably fixed.

6. Calender (1) according to any one of claims 1 to 5, **characterised in that** the first and/or second adjustment systems (9, 9a) of the feed roll can be centrally driven.

7. Calender (1) according to any one of claims 3 to 6, **characterised in that** gearing (14) is arranged between the pinion (11) and the motor (12) of the adjustment system (9, 9a).

8. Calender (1) according to claim 7, **characterised in that** the gearing (14) is configured as planetary gearing.

9. Calender (1) according to any one of claims 3 to 8, **characterised in that** the motor (12) is a servomotor.

10. Calender (1) according to any one of claims 1 to 9, **characterised in that** three rolls (2, 3,15) are provided, of which two rolls (2, 15)are configured as feed rolls.

11. Method for producing a film of thermoplastic materials, in which the thermoplastic material is fed as a melt to a calender by means of two rotating rolls (2, 3, 15) which can be adjusted in their distance from one another in a first plane (E1), of which one roll (3) is mounted statically and between which a rolling gap (4, 4') which can be set in accordance with the separation of the rolls is formed, wherein the melt is fed through the rolling gap (4, 4') and is thereby shaped into the film and cooled, and wherein a thickness measuring apparatus provided for compiling a thickness profile of the film over the width thereof, **characterised in that** a thickness measurement profile of the film is compiled, which is compared with a predetermined setpoint value, and in accordance with the difference of the thickness measurement profile from the setpoint value one of the rolls (15) is overlapped in respect of its rotation axis (R2) relative to the rotation axis (R3) of the other roll (3) facing it in the rolling gap (4), in a second plane (E2) which extends perpendicularly to the first plane (E1).

12. Method according to claim 11, **characterised in that** the rolls (2, 3, 15) are rotatably mounted on the end in bearings (5, 6, 7, 8, 18, 19), and the bearings (18, 19) of the roll (15) are moved during the overlapping of the latter from a neutral position, in which the rotation axes (R2, R3) of the roll (15) and of the other roll (3) extend parallel to one another, in opposite directions to one another in the plane (E2).

13. Method according to any one of claims 11 or 12, **characterised in that** a movement path of the bearings (18,19) of respectively ±30 mm is provided.

**Revendications**

1. Appareil de lissage (1) pour la fabrication d'un film en matières thermoplastiques, comprenant au moins deux rouleaux (2, 3, 15) entre lesquels une fente de rouleau (4, 4') est réalisable pour le passage du film, dans lequel les rouleaux (2, 3, 15) sont logés de manière rotative côté extrémité dans des paliers (5, 6, 7, 8, 18, 19) et un des rouleaux (3) est réalisé fixement et au moins un autre rouleau (2, 15) est réalisé en tant que rouleau d'avance et présente un premier système de réglage (9), au moyen duquel les paliers (5, 6, 18, 19) du rouleau d'avance sont déplaçables par modification de la fente de rouleau (4, 4') et un dispositif de mesure d'épaisseur pour l'établissement d'un profil d'épaisseur du film sur la largeur de celui-ci est prévu, **caractérisé en ce que** le rouleau d'avance présente au niveau des deux paliers (5, 6, 18, 19) respectivement un premier système de réglage (9) et associé à chaque premier système de réglage (9) est prévu un second système de réglage (9a), au moyen duquel un entrelacement axial du rouleau d'avance au rouleau (3) fixe peut être réglé, dans lequel les valeurs de mesure du profil de mesure d'épaisseur peuvent être transmises au dispositif de régulation et au moyen duquel des valeurs de correction pour l'entrelacement axial du rouleau d'avance peuvent être déterminées et le second système de réglage (9a) peut être commandé de manière conséquente.

2. Appareil de lissage selon la revendication 1, **caractérisé en ce que** le second système de réglage (9a) est agencé tourné de 90° par rapport au premier système de réglage (9).

3. Appareil de lissage (1) selon la revendication 1, **caractérisé en ce que** le premier et/ou second système de réglage (9, 9a) présente une tige dentée (10) ainsi qu'un pignon (11) qui est en prise dentée avec la tige dentée et peut être entraîné en rotation par un moteur (12), dans lequel la distance entre le pignon (11) et la tige dentée (10) peut être modifiée par modification de la profondeur de prise dentée entre ceux-ci.

4. Appareil de lissage (1) selon la revendication 3, **caractérisé en ce que** la distance entre le pignon (11) et la tige dentée (10) peut être modifiée par le biais d'un engrenage à excentrique agissant sur le pignon (11).

5. Appareil de lissage (1) selon l'une quelconque des revendications 3 ou 4, **caractérisé en ce que** la distance entre le pignon (11) et la tige dentée (10) peut être fixée de manière amovible.

6. Appareil de lissage (1) selon l'une quelconque des revendications 1 à 5, **caractérisé en ce que** les premier et/ou second systèmes de réglage (9, 9a) du rouleau d'avance peuvent être commandés de manière centrale.

7. Appareil de lissage (1) selon l'une quelconque des revendications 3 à 6, **caractérisé en ce qu'**un engrenage (14) est agencé entre le pignon (11) et le moteur (12) du système de réglage (9, 9a).

8. Appareil de lissage (1) selon la revendication 7, **caractérisé en ce que** l'engrenage (14) est réalisé en tant qu'engrenage planétaire.

9. Appareil de lissage (1) selon l'une quelconque des revendications 3 à 8, **caractérisé en ce que** le moteur (12) est un servomoteur.

10. Appareil de lissage (1) selon l'une quelconque des revendications 1 à 9, **caractérisé en ce que** trois rouleaux (2, 3, 15) sont prévus, dont deux rouleaux (2, 15) sont réalisés en tant que rouleaux d'avance.

11. Procédé de fabrication d'un film en matières thermoplastiques, où les matières thermoplastiques sont amenées en tant que fonte à un appareil de lissage avec au moins deux rouleaux (2, 3, 15) rotatifs et réglables dans leur distance l'un de l'autre dans un premier plan (E1), dont un rouleau (3) est logé fixement et entre lesquels une fente de rouleau (4, 4') réglable selon la distance des rouleaux est réalisée, dans lequel la fonte est guidée au travers de la fente de rouleau (4, 4') et est formée et refroidie pour former le film, et dans lequel un dispositif de mesure d'épaisseur est prévu pour l'établissement d'un profil d'épaisseur du film sur la largeur de celui-ci, **caractérisé en ce qu'**un profil de mesure d'épaisseur du film est établi, lequel est comparé avec une valeur de consigne prédéfinie et un des rouleaux (15) est entrelacé selon l'écart mesuré du profil de mesure d'épaisseur de la valeur de consigne en ce qui concerne son axe de rotation (R2) par rapport à l'axe de rotation (R3) de l'autre rouleau (3) opposé dans la fente de rouleau (4) dans un second plan (E2) qui s'étend perpendiculairement au premier plan (E1).

12. Procédé selon la revendication 11, **caractérisé en ce que** les rouleaux (2, 3, 15) sont logés de manière rotative côté extrémité dans des paliers (5, 6, 7, 8, 18, 19) et les paliers (18, 19) du rouleau (15) sont déplacés, lors de l'entrelacement de celui-ci d'une position zéro dans laquelle les axes de rotation (R2, R3) du rouleau (15) et de l'autre rouleau (3) s'étendent parallèlement l'un à l'autre, de manière opposée l'un à l'autre dans le plan (E2).

13. Procédé selon la revendication 11 ou 12, **caractérisé en ce qu'**une course de déplacement des paliers (18, 19) de respectivement ± 30 mm est prévue.

Fig. 1

Fig. 2

Fig. 3

Fig. 4

Fig. 5a

Fig. 5b

fig. 6

fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000271950 A